# EUROPÄISCHE PATENTSCHRIFT

(11) **EP 2 224 512 B1**
(45) Veröffentlichungstag und Bekanntmachung des Hinweises auf die Patenterteilung: **25.01.2012**
(21) Anmeldenummer: 10001088.3
(22) Anmeldetag: 03.02.2010
(51) Int. Cl.: H01M 2/10

(54) **Akkupack für ein handgeführtes Arbeitsgerät**
Battery pack for a hand-held work device
Batterie pour un appareil de travail portatif

(30) Priorität: 27.02.2009 DE 102009012183
(43) Veröffentlichungstag der Anmeldung: 01.09.2010
(73) Patentinhaber: Andreas Stihl AG & Co. KG, 71336 Waiblingen (DE)
(72) Erfinder: Roßkamp, Heiko, Dr., 73099 Adelberg (DE); Mang, Harald, 71364 Winnenden (DE); Müller, Matthias, 73630 Remshalden (DE); Reber, Volker, 74544 Michelbach (DE)
(74) Vertreter: Wasmuth, Rolf

(56) Entgegenhaltungen:
- EP-A2- 0 676 819
- EP-A2- 1 780 818
- DE-A1-102007 017 980
- DE-U1- 20 023 629

## Beschreibung

Die Erfindung betrifft einen auswechselbaren Akkupack für ein Elektrogerät, insbesondere für ein tragbares handgeführtes Arbeitsgerät wie eine Heckenschere, eine Motorkettensäge, einen Freischneider oder dgl. nach dem Oberbegriff des Anspruchs 1.

Aus der DE 102 50 240 A1 und der DE 200 23629 U1 ist jeweils ein Akkupack für Elektrohandwerkzeugmaschinen bekannt, in dessen Gehäuse eine Mehrzahl von Zellen angeordnet sind. Die Zellen sind untereinander über Zellverbinder elektrisch miteinander verbunden und über einen äußeren Anschluss zu laden und entladen.

Die Zellen werden unmittelbar in das Akkugehäuse eingestellt und elektrisch beschaltet, wobei in das Gehäusevolumen eine maximal mögliche Zellenanzahl eingeschoben ist.

Der Erfindung liegt die Aufgabe zugrunde, einen auswechselbaren Akkupack für ein Elektrogerät anzugeben, welcher einfach und kostengünstig zu fertigen ist und mit einer den Einsatzbedingungen angepasster Zellenzahl ausgestaltet werden kann. Die Aufgabe wird erfindungsgemäß nach den kennzeichnenden Merkmalen des Anspruchs 1 gelöst.

Das Gehäuse des Akkupacks ist auf einer Stirnseite offen, so dass es über diese offene Stirnseite mit Zellen bestückt werden kann. An der gegenüberliegenden Stirnseite ist der äußere elektrische Anschluss vorgesehen, wobei die im Gehäuse vorgesehenen Zellen in einem gemeinsamen Zellhalter gehalten sind, der innerhalb des Gehäuses mit einem inneren Lagesicherungselement zusammenwirkt, das auf der Innenseite einer Seitenwand des Gehäuses des Akkupacks vorgesehen ist.

Die Zellen des Akkupacks werden somit nicht im Gehäuse selbst angeordnet, sondern durch Zellhalter gehalten, die ihrerseits im Gehäuse des Akkupacks lagefixiert sind. Somit kann die Anzahl und Anordnung der Zellen über die Zellhalter bestimmt werden, ohne dass am Akkupackgehäuse selbst Änderungen vorgenommen werden müssen. Der erfindungsgemäße Akkupack kann bei gleicher Gehäusegestaltung für unterschiedliche Zellanzahl und damit für unterschiedliche Spannungsbereiche und Leistungsbereiche in einfacher Weise gestaltet werden.

Die Lagesicherungselemente liegen zweckmäßig auf einander gegenüberliegenden Innenseiten der Seitenwände des Gehäuses, wobei ein Lagesicherungselement auf der einen Seitenwand zu dem Lagesicherungselement auf der anderen Seitenwand versetzt liegt. Dadurch ist eine Drehlageorientierung des Zellhalters im Gehäuse möglich. Ein entsprechender Zellhalter kann nur in einer konstruktiv vorgesehenen Drehlage in das Gehäuse des Akkupacks eingesetzt werden.

Zweckmäßig ist das Lagesicherungselement an der offenen Stirnseite des Gehäuses als Befestigungsdom ausgebildet, in dem eine Befestigungsschraube des Deckels eingeschraubt werden kann. Das Lagesicherungselement ist dabei vorteilhaft durch eine Längsrippe gebildet, die vorzugsweise einen teilkreisförmigen bis wulstartigen Querschnitt hat und sich zwischen den Stirnseiten des Gehäuses in dessen Längsrichtung erstreckt.

Ein Zellhalter weist einen Führungsabschnitt auf, mit dem er auf der Längsrippe geführt ist, so dass mehrere Zellhalter in Längsrichtung des Akkupackgehäuses eingeschoben werden können, ohne dass Einzelelemente verklemmen oder eine falsche Lage einnehmen:

Zur Führung des Akkupackgehäuses in einer Aufnahme eines Arbeitsgerätes sind in der Seitenwand des Akkupackgehäuses äußere Führungsnuten ausgebildet, die sich in Längsrichtung des Gehäuses zwischen dessen Stirnseiten erstrecken. Dabei ist die Konstruktion vorteilhaft so vorgesehen, dass die äußere Führungsnut und das innere Lagesicherungselement derart zueinander liegen, dass die Führungsnut im Material des Lagesicherungselementes ausgebildet ist.

Die Trennebene zwischen dem Deckel und dem Gehäuse liegt vorteilhaft auf der Höhe eines Zellhalters, wobei ein Rand des Zellhalters die Trennfuge zwischen Deckel und Gehäuse flächig abdecken kann und so zu einer Versteifung des Gehäuseabschnittes im Bereich der Trennebene führt.

Bevorzugt sind die Zellhalter, die zwischen sich die Zellen halten, miteinander mechanisch verbunden, z. B. verschraubt. Die durch die Zellhalter mechanisch zueinander fixierten Zellen bilden einen Zellcontainer mit einer vorgegebenen Nennspannung, die je nach Anzahl und Verschaltung der Zellen (Reihenschaltung, Parallelschaltung) variiert.

Das Gehäuse des Akkupacks kann mehrere Zellcontainer aufnehmen, die zweckmäßig in Längsrichtung des Gehäuses übereinander liegen und z. B. elektrisch in Reihe oder zueinander parallel geschaltet werden.

Weitere Merkmale der Erfindung ergeben sich aus den weiteren Ansprüchen, der Beschreibung und der Zeichnung. Es zeigen:
- Fig. 1: eine perspektivische Ansicht auf einen auswechsel- baren Akkupack nach der Erfindung,
- Fig. 2: eine Ansicht auf eine breite Seitenwand des Akkupacks nach Fig. 1,
- Fig. 3: einen Längsschnitt durch den Akkupack,
- Fig. 4: eine Ansicht des elektrischen Anschlusses auf einer Stirnseite des Akkupacks,
- Fig. 5: eine perspektivische Ansicht des elektrischen An- schlusses nach Fig. 4,
- Fig. 6: einen schematischen Schnitt längs der Linie VI-VI in Fig. 2,
- Fig. 7: eine Ansicht gemäß Fig. 6 mit an den Enden der Zellen angeordneten Zellverbindern,
- Fig. 8: einen Schnitt längs der Linie VIII-VIII in Fig. 2,
- Fig. 9: einen Schnitt längs der Linie IX-IX in Fig. 2,
- Fig. 10: einen Schnitt längs der Linie X-X in Fig. 2,
- Fig. 11: in schematischer Darstellung eine Teilansicht eines auf einer Leitrippe geführten Zellhalters,

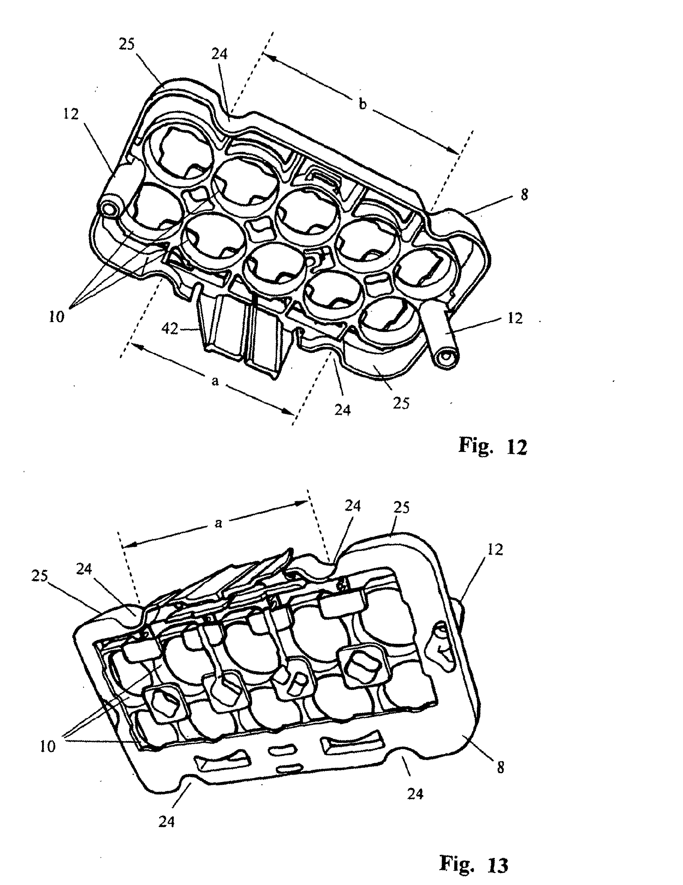

- Fig. 12: einen Zellhalter in perspektivischer Darstellung von innen gesehen,
- Fig. 13: einen Zellhalter in perspektivischer Darstellung von außen gesehen,
- Fig. 14: eine alternative Anordnung von Einzelzellen im Akku- packgehäuse,
- Fig. 15: eine weitere Alternative der Anordnung von Zellen im Akkupackgehäuse,
- Fig. 16: eine vierte Alternative der Anordnung von Einzel- zellen im Akkupackgehäuse.

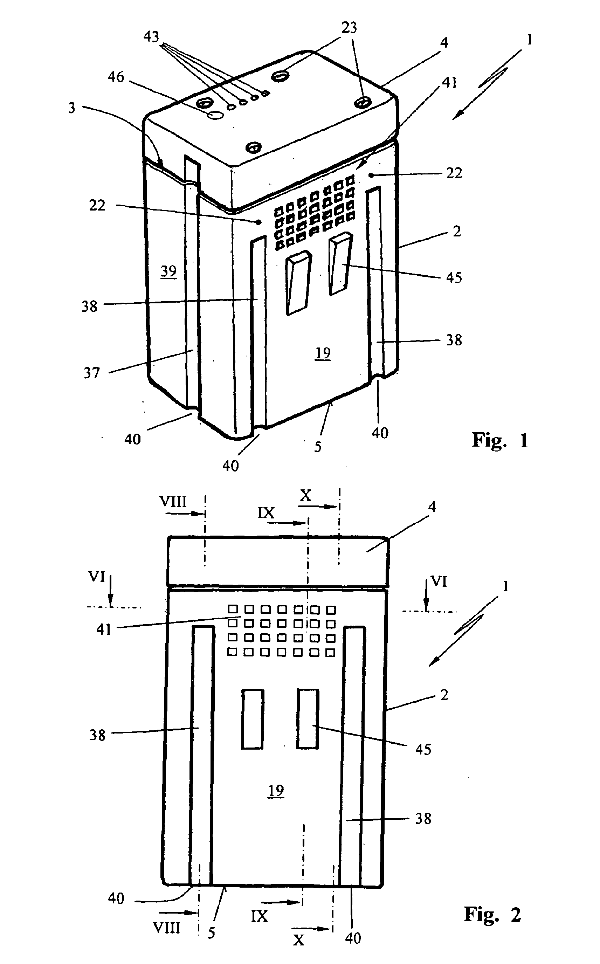

Die Figuren 1 bis 3 zeigen einen Akkupack 1, der als Energiequelle auswechselbar im Gehäuse eines Elektrogerätes, z. B. eines tragbaren, handgeführten Arbeitsgerätes eingeschoben werden kann. Ein derartiges Arbeitsgerät kann eine Heckenschere, eine Motorkettensäge, ein Trennschleifer, ein Freischneider, ein Kantenscheider, ein Hochentaster, ein Blasgerät, ein Sprühgerät, ein Sauggerät, ein Erdbohrgerät, ein Kombimotorgerät für multifunktionelle Vorsätze, ein Kehrgerät, eine Motorhacke, eine Bodenfräse, ein Hochdruckreiniger, ein Rasenmäher, ein Vertikutierer, ein Häcksler, ein Nass- oder Trockensauger oder dgl. Gerät sein.

Der Akkupack 1 besteht im Ausführungsbeispiel im Wesentlichen aus einem Gehäuse 2, welches quaderförmig gestaltet und zumindest auf einer Stirnseite 3 offen ist. Die offene Stirnseite 3 ist von einem Deckel 4 verschlossen, wobei auf der dem Deckel 4 gegenüberliegenden - im Ausführungsbeispiel geschlossenen - Stirnseite 5 ein äußerer elektrischer Anschluss 6 vorgesehen ist, über den der Akkupack entweder mit den elektrischen Anschlüssen des zu betreibenden Elektrogerätes zu verbinden ist oder mit einem Ladegerät zum Laden der im Gehäuse 2 des Akkupacks 1 angeordneten Zellen 7. Über den äußeren elektrischen Anschluss 5 werden somit die im Gehäuse 2 des Akkupacks 1 angeordneten Gruppen von Zellen 7 geladen und entladen.

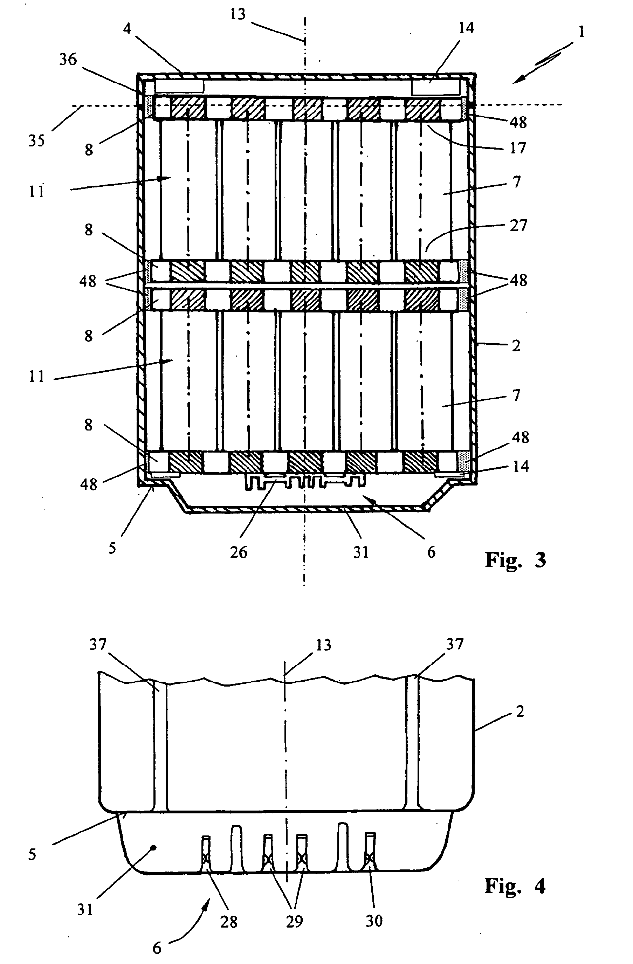

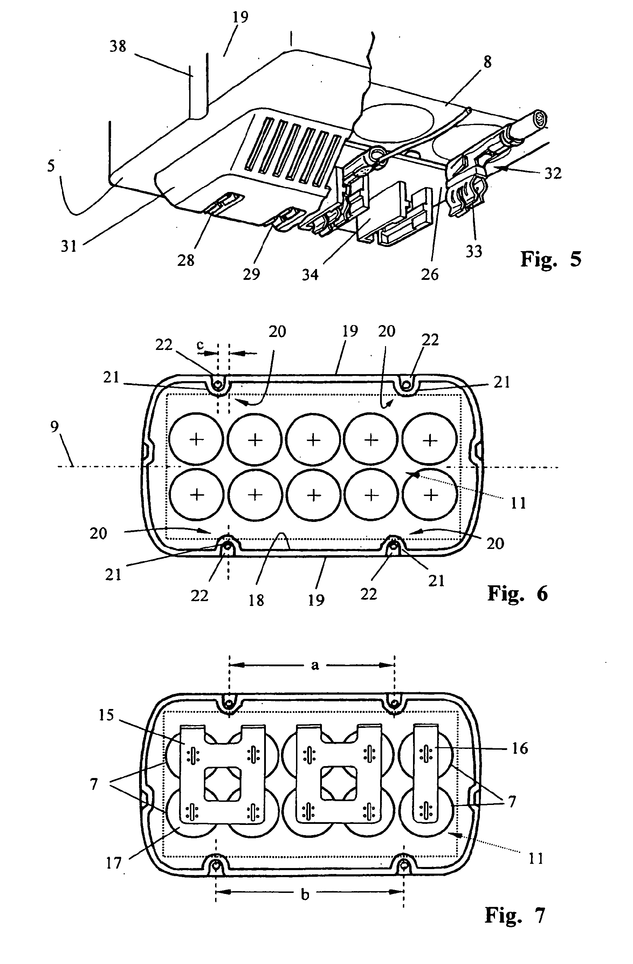

Wie in Fig. 3 gezeigt, sind die Zellen 7 in Zellhaltern 8, 9 gehalten, wozu die Enden 17, 27 einer jeden Zelle 7 in je einer Aufnahme 10 eines Zellhalters 8 fixiert sind. Der Zellhalter 8, 9 übergreift nach Art einer Kappe die Umfangswand der Zellen zumindest teilweise. Die Aufnahmen 10 sind im Boden eines Zellhalters 8 ausgebildet. Im gezeigten Ausführungsbeispiel sind - wie Fig. 6 zeigt - zehn Zellen in zwei Reihen zu je fünf Zellen vorgesehen, wobei - in Draufsicht gesehen - die Zellen symmetrisch zu einer Querachse 9 angeordnet sind.

Die Zellhalter 8 sind als Gleichteile ausgebildet, wobei je zwei Zellhalter 8 zusammen mit den zwischen ihnen angeordneten Einzelzellen 7 einen Zellcontainer 11 bilden, der eine mit elektrischen Anschlüssen versehene Baueinheit bildet.

Die Zellhalter 8 stützen sich über Befestigungsdome 12 gegeneinander ab, so dass nach dem Zusammenfügen der aneinander anliegenden Zellhalter 8 die dazwischen liegenden Zellen 7 an ihren Enden 17, 27 gehalten sind und so eine gemeinsame mechanische Einheit bilden. Im Ausführungsbeispiel sind die Zellhalter 8 über in die Befestigungsdome 12 eingreifende Schrauben 23 miteinander verschraubt; anstelle von Schrauben 23 können auch Steckverbindungen oder Rastverbindungen zweckmäßig sein.

Wie Fig. 3 zeigt, sind in Richtung der Längsachse 13 des quaderförmigen Akkupacks 1 zwei Zellcontainer 11 übereinanderliegend aufgenommen und zwischen der geschlossenen Stirnseite 5 und dem Deckel 4 gehalten. Es kann zweckmäßig sein, elastische Lagerelemente 14 zwischen der Stirnseite 5 und dem anliegenden unteren Zellcontainer 11 und dem Deckel 14 und dem oberen Zellcontainer 11 anzuordnen, so dass die Zellcontainer 11 zwischen Stirnseite 5 und Deckel 4 verspannt liegen.

Die Zellen 7 eines Zellcontainers werden - wie Fig. 7 zeigt - an ihren Enden 17 bzw. 27 über Zellverbinder 15, 16 miteinander elektrisch verbunden, wobei die Zellverbinder 15 und 16 jeweils auf Kontakten der Zellenden 17, 27 festgeschweißt sind.

Jeder Zellcontainer 11 ist im Akkupackgehäuse 2 durch mindestens ein Lagesicherungselement 20 gehalten. Ein derartiges Lagesicherungselement ist auf der Innenseite 18 einer Seitenwand 19 vorgesehen. Zweckmäßig ist das Lagesicherungselement 20 als vorteilhaft durchgehende Längsrippe 21 gestaltet, die - wie die Figuren 6 und 7 zeigen - sich in Richtung der Längsmittelachse 13 zwischen den Stirnseiten 3 und 5 des Gehäuses 2 erstreckt. Auf einer Innenseite 18 sind vorteilhaft zwei parallel zueinander liegende Längsrippen 21 angeordnet, die im Querschnitt teilkreisförmig bzw. wulstartig ausgestaltet sind. Jede Längsrippe 7 endet an der offenen Stirnseite 3 des Akkupackgehäuses 2 in einem Befestigungsdom 22 für mindestens eine Befestigungsschraube 23 des Deckels 4. Das auf einer Innenseite 18 einer Seitenwand 19 vorgesehene Lagesicherungselement 20 bildet somit an der offenen Stirnseite 3 des Akkupackgehäuses 2 einen einteilig angeformten Befestigungsdom 22.

Wie die Figuren 6 und 7 zeigen, sind zur Lagefixierung eines Zellcontainers 11 auf den breiten Seitenwänden 19 mehrere Lagesicherungselemente 20 vorgesehen; im gezeigten Ausführungsbeispiel sind auf jeder Seitenwand 19 zwei Längsrippen 21 ausgebildet, die zueinander parallel liegen. Die Längsrippen 21 auf der einen Seitenwand 19 haben dabei einen kleineren seitlichen Abstand a zueinander als die Längsrippen 21 auf der gegenüberliegenden breiten Seitenwand 19, die einen größeren Abstand b zueinander zeigen. Wie in Fig. 6 dargestellt, liegen somit die Längsrippen 21 der einen Seitenwand 19 zu den Längsrippen 21 der anderen Seitenwand 19 um den Abstand c zueinander seitlich versetzt. Dadurch wird erreicht, dass ein Zellhalter 8 nur in einer bestimmten, vorgegebenen Drehlage in das Akkupackgehäuse 2 eingesetzt werden kann. Aufgrund der unterschiedlichen Abstände a, b der auf den Seitenwänden 19 angeordneten Führungsrippen 21 können die Zellhalter 8 nur in einer konstruktiv vorgegebenen Lage eingeschoben werden, da die im Rand 25 der Zellhalter 8 als Ausnehmungen vorgesehenen Führungsabschnitte 24 korrespondierende Abstände a, b aufweisen.

Der an der geschlossenen Stirnseite 5 anliegende Zellcontainer 11 trägt an seinem Zellhalter 8 eine Kontaktplatte 26, die durch entsprechende Schlitze 28, 29, 30 durch den Anschlusskopf 31 des Akkupackgehäuses 2 zugänglich sind. In Fig. 5 ist die vom unteren Zellhalter 8 getragene Kontaktplatte 26 gezeigt, welche als L-förmig ausgebildete Kabelendklemmen 32 ausgebildete Kontakte 33 zeigen. Die Endklemmen 32 sind in entsprechenden Kontaktaufnahmen 34 gehalten und über die Zugangsschlitze 28, 29 im Anschlusskopf 31 des Gehäuses 2 kontaktierbar. Der elektrische Anschluss 6 ist als Steckkontakt ausgebildet, wobei durch die Schlitze 28, 29, 30 Flachkontakte in Richtung der Längsmittelachse 13 in die Kontakte 33 der Kabelendklemmen 32 eingeschoben werden können. Zweckmäßig sind die Schlitze 28, 29 und 30 des Anschlusskopfes 31 des Akkupackgehäuses 2 auch an einer Stirnseite offen, so dass eine Kontaktierung der Akkupackkontakte 33 auch durch ein Einschieben eines Flachkontaktes über den stirnseitig offenen Schlitz 28, 29 oder 30 möglich ist.

Die Trennebene 35 zwischen dem Deckel 4 und dem Akkupackgehäuse 2 liegt vorteilhaft in der Höhe eines Zellcontainers 11, zweckmäßig in der Höhe eines Zellhalters 8, der dem Deckel 4 unmittelbar benachbart liegt. Damit wird erreicht, dass der Deckel 4 mit seinem Rand 36 das Ende eines Zellcontainers 11, nämlich des Zellhalters 8 übergreift, wodurch eine Querfixierung des Deckels 4 über den Zellhalter 8 bzw. den Zellcontainer 11 erfolgt. Der Zellcontainer 11 überbrückt als mechanisch stabiler Block die Trennebene 35 zwischen Akkupackgehäuse 2 und dem Deckel 4 und bildet eine Versteifung.

Der Akkupack 1 weist in den Seitenwänden 19, 39 mindestens eine äußere Führungsnut 37, 38 auf, die zur Führung des Akkupacks 1 in einer Aufnahme eines nicht dargestellten Maschinengehäuses des zu betreibenden Elektrogerätes dient. Diese äußeren Führungsnuten 37, 38 sind zur unteren Stirnseite 5 offen. Die offenen Enden 40 der äußeren Führungsnuten 37, 38 dienen dem Auffädeln des Akkupacks 1 auf entsprechende Führungsrippen im Gehäuse eines Arbeitsgerätes. Die Führungsnuten 38 auf den breiten Seitenwänden 19 des quaderförmigen Akkupackgehäuses 2 liegen zu den als Längsrippen 21 ausgebildeten inneren Lagesicherungselementen 20 auf gleicher Höhe, so dass die Führungsnut 38 im Material der als Lagesicherungselement 20 vorgesehenen Längsrippe 21 ausgebildet ist. Die zum Anschlusskopf 31 auf der unteren Stirnseite 5 offenen Führungsnuten 38 sind an ihren dem Deckel 4 zugewandten Enden durch einen Befestigungsdom 22 verschlossen, der jeweils eine Befestigungsschraube 23 des Deckels 4 aufnimmt. Es kann zweckmäßig sein, wie anhand der Führungsnut 37 dargestellt, diese bis in den Deckel 4 zu führen. Regelmäßig werden die äußeren Führungsnuten 37 und 38 so ausgebildet, dass sie an ihren dem Anschlusskopf auf der Stirnseite 5 zugewandten Enden 40 offen sind und auf ihren gegenüberliegenden, dem Deckel 4 zugewandten Enden verschlossen sind.

Wie in den Figuren 1 und 2 gezeigt, kann es zweckmäßig sein, auf einer Seitenwand 19 des Akkupackgehäuses 2 Rastrampen 45 auszubilden, die einer Verriegelung des Akkupacks 1 in einem Aufnahmegehäuse eines Arbeitsgerätes dienen.

Es können ferner eine oder mehrere Entlüftungsöffnungen 41 zweckmäßig sein, die in einer breiten und/oder schmalen Seitenwand 39, 19 das Akkupackgehäuses 2 ausgebildet sein können.

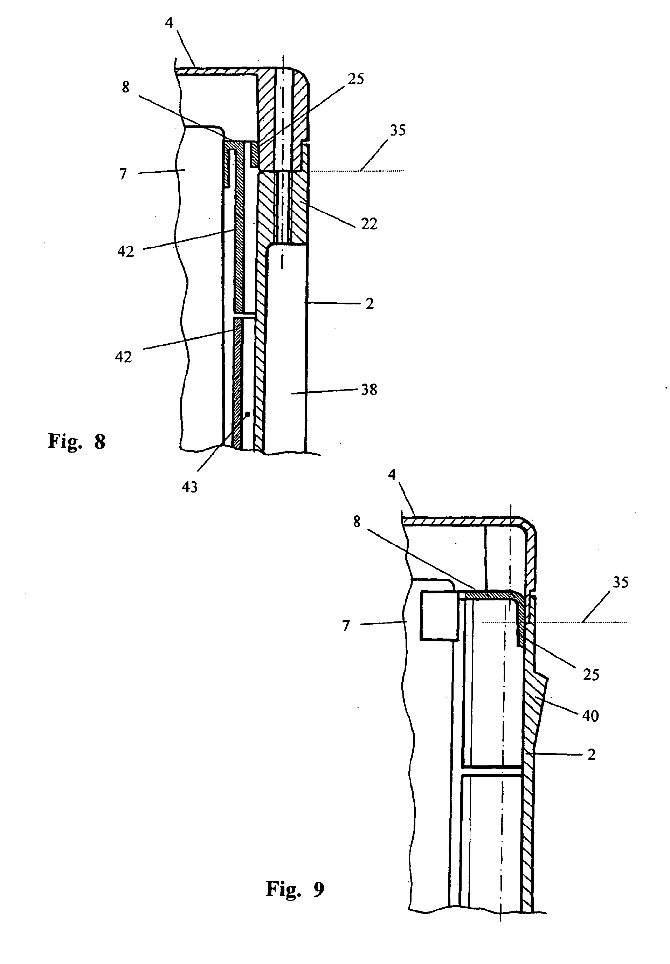

Die Figuren 8 bis 11 zeigen im Schnitt die Lage eines Zellhalters 8 und dessen Abstützwirkung am Akkupackgehäuse 2.

In Fig. 8 ist der Befestigungsdom 22 am Ende der Führungsnut 38 zu erkennen, wobei der Zellhalter 8 mit seinem Rand 25 oberhalb der Trennebene 35 am Deckel 4 anliegt und diesen somit relativ zum Gehäuse 2 des Akkupacks 1 ausrichtet. Die Zellhalter 8 weisen ferner Wandfortsätze 42 auf, die derart in Längsrichtung des Akkupackgehäuses verlängert sind, dass sie in Richtung der Längsmittelachse 13 des Gehäuses 2 etwa aneinander anliegen. Die Wandfortsätze 42 begrenzen mit dem Gehäuse 2 einen Kabelkanal 43 für die zur Verdrahtung der Zellcontainer 11 notwendigen Drähte.

Wie Fig. 9 zeigt, liegt in besonderer Weiterbildung der Erfindung der Rand 25 des Zellhalters 8 zwischen den Führungsnuten 38 sowohl am Rand des Deckels 4 als auch am Rand des Gehäuses 2 an und überbrückt dabei die Trennebene 35 zwischen dem Deckel 4 und dem Gehäuse 2. Dadurch erfolgt eine Versteifung des Akkupackgehäuses 2 im Bereich der Trennebene 35.

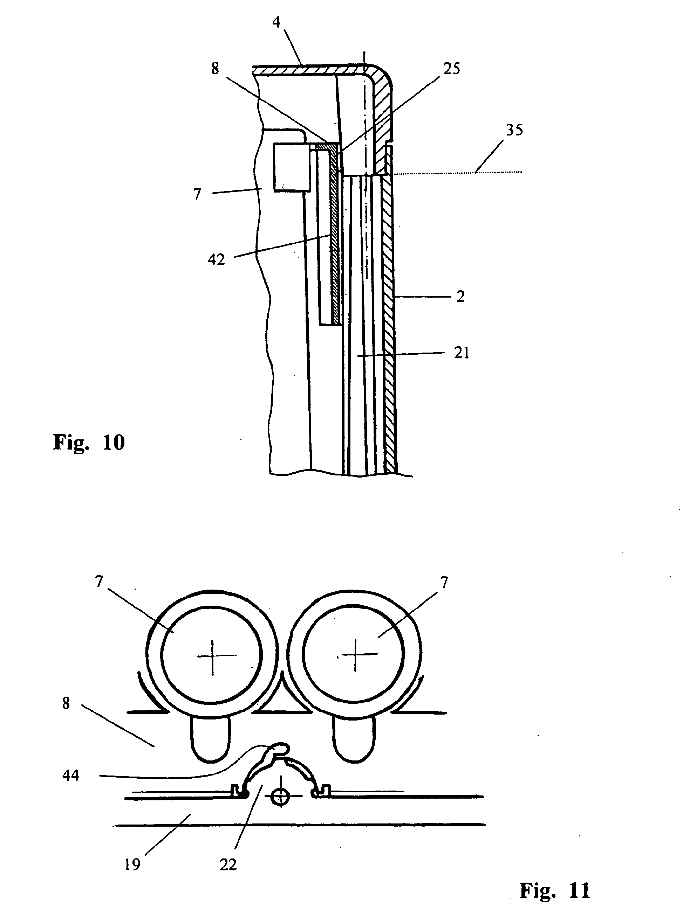

Wie in Fig. 3 gezeigt, kann ein Zellhalter 8 mit seinen Randabschnitten 48 an der Innenwand des Akkupackgehäuses 2 im Wesentlichen spielfrei anliegen, wodurch der Zellhalter 8 selbst als innere Versteifungsstrebe wirkt und das Gehäuse 2 des Akkupacks 1 gegen Verformung schützt. Durch den in der Höhe der Trennebene 35 liegenden oberen Zellhalter 8 erfolgt eine Versteifung an der Nahtstelle zwischen Gehäuse 2 und Deckel 4, so dass Querkräfte auf den Deckel 4 sicher abgefangen werden. Der Zellhalter 8 liegt mit seinem umlaufenden Rand 25 am umlaufenden Rand des Deckels 4 an, wodurch dieser eine große Steifigkeit erhält, insbesondere zwischen den Krafteinleitungspunkten der Verschraubung des Deckels 4. Die Versteifung des Gehäuses 2 ist auch im Bereich der Rastrampen 45 erzielt, so dass in diesem Bereich eingeleitete Rast- oder Haltekräfte keine Verformung des Gehäuses 2 bewirken können; dadurch ist eine gehäusefeste Verrastung und damit sichere Halterung des Akkupacks 1 in einem Akkuschacht gewährleistet. Wie in Fig. 11 dargestellt, ist im Bereich des Befestigungsdoms 22 ein Klemmfortsatz 44 angeformt, der verformbar ist und das durch die notwendige Ausformschräge des becherförmigen Akkupackgehäuses 2 bestehende Spiel zwischen Gehäuse 2 und Zellhalter 8 egalisiert.

Im Ausführungsbeispiel können die Zellen 7 als NiCd-Zellen (Nickel-Cadmium-Zellen), als NiMh-Zellen (Nickel-Metallhydrid-Zellen), als LiIo-Zellen (Lithium-Ionen-Zellen), als LiPo-Zellen (Lithium-Polymer-Zellen), als LiFePo4-Zellen (Lithium-Eisen-Phosphat-Zellen), als Lithium-Titanat-Zellen oder dgl. Zellen vorgesehen sein. Bevorzugt werden auf Lithium basierende Akkuzellen mit einer Zellspannung zwischen 2 Volt und 5 Volt, vorzugsweise mit einer Zellspannung von etwa 3,6 Volt bis 3,7 Volt eingesetzt. Die Zellen 7 sind elektrisch derart miteinander verschaltet (Reihenschaltung, Parallelschaltung), dass die Nennspannung des gesamten Akkupacks 1 vorteilhaft zwischen 12 Volt und 150 Volt, vorzugsweise 25 Volt bis 50 Volt, insbesondere 36 Volt ist, wobei ein einzelner Zellcontainer 11 eine Nennspannung von 18 Volt haben kann. Die in einem Akkupackgehäuse 2 aufgenommenen Zellcontainer 11 sind vorteilhaft elektrisch in Reihe geschaltet, so dass eine Akkupackspannung von im Ausführungsbeispiel 36 Volt erzielt ist. Die Kapazität des erfindungsgemäßen Akkupacks liegt im Bereich von 2 Ah bis 10 Ah.

In bevorzugter Weiterbildung der Erfindung ist im Deckel 4 des Akkupacks 1 eine Steuer- und Überwachungseinrichtung integriert, welche im Deckel vorgesehene Anzeigeelemente 43 - bevorzugt LED's - steuert. Die Stirnseite des Deckels 4 bleibt auch in Betriebslage des Akkupacks 1 in einem Akkuschacht eines Arbeitsgerätes sichtbar, so dass der Benutzer über die Anzeigeelemente 43 Informationen über den Zustand der Zellen 7 des Akkupacks 1 ablesen und über ein Betätigungselement 46 wie z. B. einen Taster Aktionen wie Prüffunktionen initiieren kann. Über die Anzeigeelemente 43 kann z. B. der abgerufene Ladezustand bzw. Entladezustand der Zellen 7 ebenso angezeigt werden, wie eine eventuelle Fehlfunktion, die aktuelle Betriebstemperatur der Zellen oder andere Betriebs- oder Überwachungsparameter.

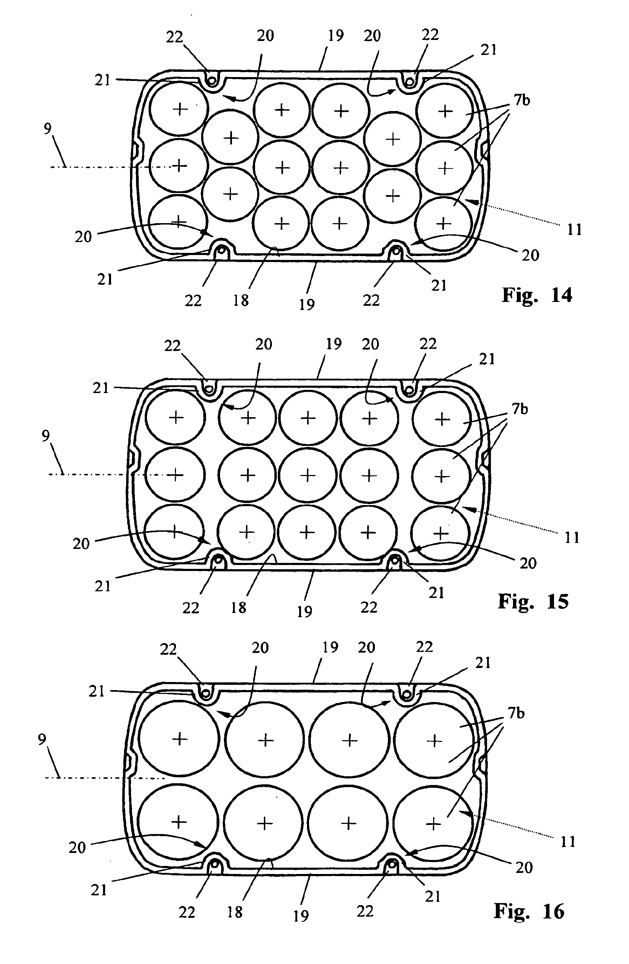

In den Darstellungen nach den Figuren 14 bis 16 wird deutlich, dass das Akkupackgehäuse zur Aufnahme unterschiedlicher Zellgrößen und unterschiedlicher Zellzahlen geeignet ist. In Fig. 14 sind 16 Zellen vorgesehen, so dass ein einzelner Zellcontainer eine Spannung von bis zu 52 Volt haben kann. Durch die Anordnung 3-2-3-3-2-3 sind im Bereich der Lagesicherungselemente 20 Freiräume geschaffen, die auch zur Führung einer Verdrahtung genutzt werden können.

Im Ausführungsbeispiel nach Fig. 15 sind fünf Reihen von jeweils drei Zellen nebeneinander angeordnet, wobei im Bereich der als Lagesicherungselement vorgesehenen Längsrippen Freiräume vorgesehen sind.

Im Ausführungsbeispiel nach Fig. 16 sind acht Zellen vorgesehen, die eine größere Kapazität aufweisen und so einen Akkupack mit einer Nennspannung von ca. 30 Volt und einer hohen Leistung zur Verfügung stellen.

## Patentansprüche

1. Auswechselbarer Akkupack für ein Elektrogerät, mit einem Gehäuse (2), in dem eine Mehrzahl von Zellen (7) gehalten sind, und die Zellen (7) untereinander über Zellverbinder (15, 16) elektrisch miteinander verbunden und an einen gemeinsamen äußeren elektrischen Anschluss (6) angeschlossen sind, über den die Zellen (7) geladen und entladen werden, wobei das Gehäuse (2) auf einer Stirnseite (3) offen ist und die Stirnseite (3) von einem Deckel (4) verschlossen ist,
**dadurch gekennzeichnet, dass** an der gegenüberliegenden Stirnseite (5) der äußere elektrische Anschluss (6) vorgesehen ist, und jeweils mehrere Zellen (7) in einem gemeinsamen Zellhalter (8) gehalten sind, und der Zellhalter (8) mit mindestens einem inneren Lagesicherungselement (20) zusammenwirkt, das auf der Innenseite (18) einer Seitenwand (19) des Gehäuses (2) des Akkupacks (1) vorgesehen ist, wobei auf den einander gegenüberliegenden Innenseiten (18) der Seitenwände (19) des Gehäuses (2) die Lagesicherungselemente (20) angeordnet sind, und ein Lagesicherungselement (20) auf der einen Seitenwand (19) zu dem Lagesicherungselement (20) auf der anderen Seitenwand (19) versetzt liegt.

2. Akkupack nach Anspruch 1,
**dadurch gekennzeichnet, dass** das Lagesicherungselement (20) an der offenen Stirnseite (3) des Gehäuses (2) als Befestigungsdom (22) des Deckels (4) ausgebildet ist.

3. Akkupack nach Anspruch 1 oder 2,
**dadurch gekennzeichnet, dass** das Lagesicherungselement (20) eine vorzugsweise wulstartig ausgebildete Längsrippe (21) ist, die sich zwischen den Stirnseiten (3, 5) des Gehäuses (2) in Richtung dessen Längsmittelachse (13) erstreckt.

4. Akkupack nach einem der Ansprüche 1 bis 3,
**dadurch gekennzeichnet, dass** der Zellhalter (8) einen Führungsabschnitt (24) aufweist, mit dem er auf der Längsrippe (21) geführt ist.

5. Akkupack nach einem der Ansprüche 1 bis 4,
**dadurch gekennzeichnet, dass** in einer Seitenwand (19) des Akkupackgehäuses (2) eine äußere Führungsnut (37, 38) ausgebildet ist, die sich in Richtung der Längsmittelachse (13) des Gehäuses (2) zwischen dessen Stirnseiten (3, 5) erstreckt, wobei die äußere Führungsnut (37, 38) und das innere Lagesicherungselement (20) derart zueinander liegen, dass die Führungsnut (38) im Material des Lagesicherungselementes (20) ausgebildet ist.

6. Akkupack nach Anspruch 4 oder 5,
**dadurch gekennzeichnet, dass** die Führungsnut (37, 38) an der den elektrischen Anschluss (6) aufweisenden Stirnseite (5) des Gehäuses (2) offen endet.

7. Akkupack nach einem der Ansprüche 4 bis 6,
**dadurch gekennzeichnet, dass** die Führungsnut (37, 38) an der offenen Stirnseite (3) des Gehäuses (2) durch einen Befestigungsdom (22) verschlossen ist.

8. Akkupack nach einem der Ansprüche 4 bis 7,
**dadurch gekennzeichnet, dass** mehrere Führungsnuten vorgesehen sind und die äußere Führungsnut (38) der einen Seitenwand (19) zu der äußeren Führungsnut (38) der gegenüberliegenden Seitenwand (19) parallel seitlich versetzt liegt.

9. Akkupack nach einem der Ansprüche 1 bis 8,
**dadurch gekennzeichnet, dass** jede Zelle an ihrem Ende (17, 27) in einem Zellhalter (8) gehalten ist und die eine Zelle (7) haltenden beiden Zellhalter (8) gegeneinander abgestützt sind und einen Zellcontainer (11) bilden.

10. Akkupack nach Anspruch 9,
**dadurch gekennzeichnet, dass** die Zellhalter (8) miteinander verschraubt sind.

11. Akkupack nach einem der Ansprüche 1 bis 10,
**dadurch gekennzeichnet, dass** im Gehäuse (2) des Akkupacks (1) zwei vorzugsweise elektrisch in Reihe geschaltete Zellcontainer (11) aufgenommen sind, die in Richtung der Längsmittelachse (13) des Gehäuses (2) übereinander liegen.

12. Akkupack nach einem der Ansprüche 1 bis 11,
**dadurch gekennzeichnet, dass** die Nennspannung des Akkupacks etwa 36 Volt ist.

13. Akkupack nach einem der Ansprüche 1 bis 12,
**dadurch gekennzeichnet, dass** die Zellen (7) auf Lithium basierende, wieder aufladbare Zellen mit einer Zellspannung zwischen 2 Volt und 5 Volt, vorzugsweise zwischen 3,6 Volt und 3,7 Volt sind.

14. Akkupack nach einem der Ansprüche 1 bis 13,
**dadurch gekennzeichnet, dass** das Elektrogerät ein tragbares handgeführtes Arbeitsgerät ist.

15. Akkupack nach Anspruch 14,
**dadurch gekennzeichnet, dass** das Arbeitsgerät als Heckenschere, als Motorkettensäge, als Freischneider, als Blasgerät oder dgl. ausgebildet ist.

## Claims

1. Replaceable battery pack for electrical equipment, comprising a housing (2) in which a plurality of cells (7) is held, the cells (7) being electrically connected to one another via cell connectors (15, 16) and connected to a common external electric connection (6) by way of which the cells (7) are charged and discharged, the housing (2) being open at one end face (3) and the end face (3) being closed by a cover (4), **characterised in that** the external electric connection (6) is provided on the opposite end face (5), **in that** several cells (7) each are held in a common cell holder (8) and **in that** the cell holder (8) acts together with at least one internal position securing element (20) provided on the inside (18) of a side wall (19) of the housing (2) of the battery pack (1), wherein the position securing elements (20) are located on opposite insides (18) of the side walls (19) of the housing (2) and a position securing element (20) on one side wall (19) is offset against the position securing element (20) on the other side wall (19).

2. Battery pack according to claim 1,
**characterised in that** the position securing element (20) at the open end face (3) of the housing (2) is designed as a mounting dome (22) of the cover (4).

3. Battery pack according to claim 1 or 2,
**characterised in that** the position securing element (20) is a preferably bead-like longitudinal rib (21) which extends between the end faces (3, 5) of the housing (2) in the direction of its longitudinal central axis (13).

4. Battery pack according to any of claims 1 to 3,
**characterised in that** the cell holder (8) has a guide section (24) whereby it is guided on the longitudinal rib (21).

5. Battery pack according to any of claims 1 to 4,
**characterised in that** an external guide groove (37, 38) which extends in the direction of the longitudinal central axis (13) of the housing (2) between the end faces (3, 5) thereof is formed in a side wall (19) of the battery pack housing (2), the external guide groove (37, 38) and the internal position securing element (20) being positioned relative to one another in such a way that the guide groove (38) is formed in the material of the position securing element (20).

6. Battery pack according to claim 4 or 5,
**characterised in that** the guide groove (37, 38) is open-ended at the end face (5) of the housing (2) where the electric connection (6) is provided.

7. Battery pack according to any of claims 4 to 6,
**characterised in that** the guide groove (37, 38) is closed by a mounting dome (22) at the open end face (3) of the housing (2).

8. Battery pack according to any of claims 4 to 7,
**characterised in that** a plurality of guide grooves is provided and **in that** the outer guide groove (38) of one side wall (19) is laterally offset against and parallel to the outer guide groove (39) of the opposite side wall (19).

9. Battery pack according to any of claims 1 to 8,
**characterised in that** each cell is held at its end (17, 27) in a cell holder (8) and **in that** the two cell holders (8) holding a cell (7) are supported against each other and form a cell container (11).

10. Battery pack according to claim 9,
**characterised in that** the cell holders (8) are bolted to one another.

11. Battery pack according to any of claims 1 to 10,
**characterised in that** two preferably series-connected cell containers (11) which lie on top of each other in the direction of the longitudinal central axis (13) of the housing (2) are accommodated in the housing (2) of the battery pack (1).

12. Battery pack according to any of claims 1 to 11,
**characterised in that** the battery pack has a nominal voltage of approximately 36 volts.

13. Battery pack according to any of claims 1 to 12,
**characterised in that** the cells (7) are lithium-based, rechargeable cells with a cell voltage between 2 volts and 5 volts, preferably between 3.6 volts and 3.7 volts.

14. Battery pack according to any of claims 1 to 13,
**characterised in that** the electrical equipment is a hand-held working implement.

15. Battery pack according to claim 14,
**characterised in that** the working implement is designed as a hedge cutter, a power chainsaw, a free cutter, a blower or the like.

## Revendications

1. Batterie remplaçable pour un appareil électrique, avec un boîtier (2) dans lequel sont contenues plusieurs cellules (7), les cellules (7) étant reliées électriquement entre elles par des raccords de cellules (1, 16) et étant raccordées à un raccordement électrique extérieur commun (6) par l'intermédiaire duquel elles sont chargées et déchargées, étant précisé que le boîtier (2) est ouvert sur un côté frontal (3) et que le côté frontal (3) est fermé par un couvercle,
**caractérisée en ce que** sur le côté frontal opposé (5), le raccordement électrique extérieur (6) et plusieurs cellules (7) sont contenus dans un support de cellules commun (8), et le support de cellules (8) coopère avec au moins un élément intérieur de blocage de position (20) qui est prévu sur le côté intérieur (18) d'une paroi latérale (19) du boîtier (2) de la batterie (1), étant précisé que les éléments de blocage de position (20) sont disposés sur les côtés intérieurs opposés (18) des parois latérales (19) du boîtier (2), et un élément de blocage de position (20) prévu sur une paroi latérale (19) est décalé par rapport à l'élément de blocage de position (20) prévu sur l'autre paroi latérale (19).

2. Batterie selon la revendication 1,
**caractérisée en ce que** l'élément de blocage de position (20) prévu sur le côté frontal ouvert (3) du boîtier est conçu comme une calotte de fixation (22) du couvercle (4).

3. Batterie selon la revendication 1 ou 2,
**caractérisée en ce que** l'élément de blocage de position (20) est constitué par une nervure longitudinale (21) conçue de préférence comme un renflement, qui s'étend entre les côtés frontaux (3, 5) du boîtier (2) dans le sens de l'axe longitudinal médian (13) de celui-ci.

4. Batterie selon l'une des revendications 1 à 3,
**caractérisée en ce que** le support de cellules (8) comporte une partie de guidage (24) avec laquelle il est guidé sur la nervure longitudinale (21).

5. Batterie selon l'une des revendications 1 à 4,
**caractérisée en ce qu'**il est prévu dans une paroi latérale (19) du boîtier de batterie (2) une rainure de guidage extérieure (37, 38) qui s'étend dans le sens de l'axe longitudinal médian (13) du boîtier (2) entre les côtés frontaux (3, 5) de celui-ci, étant précisé que la rainure de guidage extérieure (37, 38) et l'élément intérieur de blocage de position (20) sont situés l'un par rapport à l'autre de telle sorte que la rainure de guidage (37) soit formée dans le matériau de l'élément de blocage de position (20).

6. Batterie selon la revendication 4 ou 5,
**caractérisée en ce que** la rainure de guidage (37, 38) est ouverte à son extrémité sur le côté frontal (5) du boîtier (2) présentant le raccordement électrique (6).

7. Batterie selon l'une des revendications 4 à 6,
**caractérisée en ce que** la rainure de guidage (37, 38), sur le côté frontal ouvert (3) du boîtier (2), est fermée par une calotte de fixation (22).

8. Batterie selon l'une des revendications 4 à 7,
**caractérisée en ce que** plusieurs rainures de guidage sont prévues, et la rainure de guidage extérieure (38) d'une paroi latérale (19) est décalée latéralement, parallèlement, par rapport à la rainure de guidage extérieure (38) de la paroi latérale (19) opposée.

9. Batterie selon l'une des revendications 1 à 8,
**caractérisée en ce que** chaque cellule est retenue à son extrémité (17, 27) dans un support de cellules (8), et les deux supports (8) qui retiennent une cellule (7) sont en appui l'un contre l'autre et forment un récipient de cellules (11).

10. Batterie selon la revendication 9,
**caractérisée en ce que** les supports de cellules (8) sont reliés par vissage.

11. Batterie selon l'une des revendications 1 à 10,
**caractérisée en ce que** deux récipients de cellules (11), de préférence montés en série, qui sont superposés dans le sens de l'axe longitudinal médian (13) du boîtier (2) sont logés dans le boîtier (2) de la batterie (1).

12. Batterie selon l'une des revendications 1 à 11,
**caractérisée en ce que** la tension nominale de la batterie est d'environ 36 volts.

13. Batterie selon l'une des revendications 1 à 12,
**caractérisée en ce que** les cellules (7) sont constituées par des cellules rechargeables à base de lithium, avec une tension de cellule située entre 2 volts et 5 volts, de préférence entre 3,6 volts et 3,7 volts.

14. Batterie selon l'une des revendications 1 à 13,
**caractérisée en ce que** l'appareil électrique est un appareil portatif tenu à la main.

15. Batterie selon la revendication 14,
**caractérisée en ce que** l'appareil est conçu comme un taille-haie, une tronçonneuse, une débroussailleuse, un souffleur, etc.
